# EUROPEAN PATENT APPLICATION

(11) **EP 4 287 724 A1**
(43) Date of publication of application: **06.12.2023**
(21) Application number: 22766173.3
(22) Date of filing: 28.02.2022
(51) Int. Cl.: H04W 56/00

(54) **SYNCHRONIZATION METHOD AND COMMUNICATION APPARATUS**

(30) Priority: 08.03.2021 CN 202110251216; 15.04.2021 CN 202110408158
(71) Applicant: Huawei Technologies Co., Ltd., Shenzhen, Guangdong 518129 (CN)
(72) Inventor: WANG, Bichai, Shenzhen, Guangdong 518129 (CN); LI, Xueru, Shenzhen, Guangdong 518129 (CN)
(74) Representative: Pfenning, Meinig & Partner mbB
(86) International application number: PCT/CN2022/078222
(87) International publication number: WO 2022/188647

(57) **Abstract**

This application provides a synchronization method and a communication apparatus. The method includes: A first terminal uses another terminal as a candidate synchronization reference source with a highest synchronization priority. Because it is easy to deploy a terminal as a synchronization source, the first terminal can be easily synchronized to a terminal, and does not need to continuously search for another synchronization source after synchronization. Therefore, power consumption of searching for a synchronization source by the terminal can be reduced. Compared with a method in which a GNSS is preferentially used as a synchronization source or a base station is preferentially used as a synchronization source, a synchronization method of a first synchronization type provided in embodiments of this application can achieve synchronization more quickly, and power consumption overheads caused by continuous searching for a synchronization source can be reduced.

## Description

### CROSS-REFERENCE TO RELATED APPLICATIONS

This application claims priority to Chinese Patent Application No. 202110251216.5, filed with the China National Intellectual Property Administration on March 8, 2021 and entitled "SIDELINK SYNCHRONIZATION METHOD, TERMINAL, AND NETWORK DEVICE", which is incorporated herein by reference in its entirety. This application claims priority to Chinese Patent Application No. 202110408158.2, filed with the China National Intellectual Property Administration on April 15, 2021 and entitled "SYNCHRONIZATION METHOD AND COMMUNICATION APPARATUS", which is incorporated herein by reference in its entirety.

### TECHNICAL FIELD

This application relates to the field of wireless communication technologies, and in particular, to a synchronization method and a communication apparatus.

### BACKGROUND

Before communication, a terminal needs to search for a synchronization source and perform synchronization with the synchronization source.

Currently, in a synchronization method, synchronization is performed based on a global navigation satellite system (global navigation satellite system, GNSS)-based synchronization type. To be specific, a terminal preferentially searches for a GNSS signal. If a reliable GNSS signal can be found, synchronization is performed based on the GNSS signal. If no reliable GNSS signal is found, the terminal is first synchronized to a base station or another terminal. The terminal continuously searches for a GNSS signal, until a reliable GNSS signal is found and the terminal is synchronized to the GNSS.

In another synchronization method, synchronization is performed based on a base station-based synchronization type. To be specific, a terminal preferentially searches for a base station signal. If a reliable base station signal can be found, synchronization is performed based on the base station signal. If no reliable base station signal can be found, the terminal is first synchronized to a GNSS or another terminal. The terminal continuously searches for a base station signal, until a reliable base station signal is found and the terminal is synchronized to the base station.

However, in some scenarios, for example, in an indoor scenario, the terminal cannot find a base station signal or a GNSS signal. As a result, the terminal needs to continuously search for a synchronization source, causing high power consumption of the terminal.

### SUMMARY

This application provides a synchronization method and a communication apparatus, to reduce power consumption during terminal synchronization.

According to a first aspect, an embodiment of this application provides a synchronization method. The method may be performed by a first terminal or a module used in the first terminal. The method includes: detecting synchronization information from at least one candidate synchronization reference source, where the first terminal is a terminal that performs synchronization based on a first synchronization type, in the first synchronization type, a terminal is used as a candidate synchronization reference source with a highest synchronization priority, the at least one candidate synchronization reference source includes a second terminal, the synchronization information of the at least one candidate synchronization reference source includes first synchronization information corresponding to the second terminal, the first synchronization information includes a first synchronization signal and first indication information, and the first indication information indicates that the second terminal is the candidate synchronization reference source with the highest synchronization priority; and performing synchronization with the second terminal based on the first indication information and the first synchronization signal.

Based on the foregoing solution, the first terminal uses another terminal as a candidate synchronization reference source with a highest synchronization priority. Because it is easy to deploy a terminal as a synchronization source, the first terminal can be easily synchronized to a terminal. Therefore, power consumption of searching for a synchronization source by a terminal can be reduced. Compared with a method in which a GNSS is preferentially used as a synchronization source or a base station is preferentially used as a synchronization source, a synchronization method of a first synchronization type provided in embodiments of this application can achieve synchronization more quickly, and power consumption overheads caused by continuous searching for a synchronization source can be reduced.

In a possible implementation method, the at least one candidate synchronization reference source further includes at least one third terminal, the synchronization information of the at least one candidate synchronization reference source further includes second synchronization information corresponding to the at least one third terminal, the second synchronization information includes a second synchronization signal and second indication information, and the second indication information indicates that the third terminal is the candidate synchronization reference source with the highest synchronization priority. The method further includes: selecting, from the second terminal and the at least one third terminal, the second terminal as a synchronization source.

In a possible implementation method, the second terminal is selected as the synchronization source based on an upper layer indication of the first terminal. An upper layer herein may also be understood as a higher layer, for example, may be an application layer. For example, the first terminal selects the second terminal as the synchronization source based on an indication of the application layer (may be the user triggers the indication of the application layer through the application, or the application layer automatically triggers it).

In a possible implementation method, the second terminal is selected as the synchronization source based on reference signal received power between the first terminal and the second terminal and reference signal received power between the first terminal and the at least one third terminal. For example, if the reference signal received power between the first terminal and the second terminal is the highest, the second terminal is selected as the synchronization source.

In a possible implementation method, the second terminal is selected as the synchronization source if it is determined that a communication link can be successfully established between the first terminal and the second terminal. For example, after sending a communication link establishment request message to the second terminal, if the first terminal may receive a communication link establishment request feedback message from the second terminal, the first terminal determines that a communication link can be successfully established between the first terminal and the second terminal. For another example, if the first terminal may receive a communication link establishment request message from the second terminal, the first terminal determines that a communication link can be successfully established between the first terminal and the second terminal.

In a possible implementation method, detecting synchronization information of another candidate synchronization reference source other than the second terminal is stopped.

Based on this solution, after being synchronized with the second terminal, the first terminal stops detecting synchronization information of another candidate synchronization reference source other than the second terminal, so that power consumption of the first terminal can be reduced.

In a possible implementation method, the first terminal re-detects synchronization information of another candidate synchronization reference source other than the second terminal when a first condition is met.

Based on the foregoing solution, after being synchronized with the second terminal, the first terminal does not need to continuously search for a synchronization source, but re-searches for a synchronization source only after the first condition is met, that is, re-detects synchronization information of another candidate synchronization reference source other than the second terminal. Therefore, power consumption of the terminal can be reduced.

In a possible implementation method, the at least one candidate synchronization reference source further includes at least one third terminal, the synchronization information of the at least one candidate synchronization reference source includes second synchronization information corresponding to the at least one third terminal, the second synchronization information includes a second synchronization signal and second indication information, and the second indication information indicates that the third terminal is the candidate synchronization reference source with the highest synchronization priority. The method further includes: separately performing synchronization with some or all of the at least one third terminal based on the second indication information and the second synchronization signal.

In a possible implementation method, the first terminal stops detecting synchronization information of another candidate synchronization reference source other than the second terminal and some or all of the at least one third terminal.

Based on this solution, after being synchronized with the second terminal and the at least one third terminal, the first terminal stops detecting synchronization information of another candidate synchronization reference source other than the second terminal and some or all of the at least one third terminal, so that power consumption of the first terminal can be reduced.

In a possible implementation method, the first terminal re-detects synchronization information of another candidate synchronization reference source other than the second terminal and some or all of the at least one third terminal when a first condition is met.

Based on the foregoing solution, after being synchronized with the second terminal and some or all of the at least one third terminal, the first terminal does not need to continuously search for a synchronization source, but re-searches for a synchronization source only after the first condition is met, that is, re-detects synchronization information of another candidate synchronization reference source other than the second terminal and some or all of the at least one third terminal. Therefore, power consumption of the terminal can be reduced.

In a possible implementation method, the first condition includes any one or more of the following: the reference signal received power between the first terminal and the second terminal is lower than a first threshold; the reference signal received power between the first terminal and the third terminal is lower than a first threshold; the upper layer indication of the first terminal re-searches for a synchronization source; a communication link between the first terminal and a fourth terminal is unsuccessfully established; or the first terminal receives information that is from the second terminal or the third terminal and that indicates to re-search for a synchronization source. Optionally, the information that indicates to re-search for a synchronization source includes a synchronization signal after the second terminal switches a synchronization source and/or a synchronization offset before and after the second terminal switches a synchronization source, and the synchronization offset includes a time offset and/or a frequency offset.

In a possible implementation method, before the performing synchronization with the second terminal based on the first indication information and the first synchronization signal, it is determined that the reference signal received power between the first terminal and the second terminal is greater than a second threshold.

In a possible implementation method, after the performing synchronization with the second terminal based on the first indication information and the first synchronization signal, third synchronization information is periodically sent, where the third synchronization information includes a third synchronization signal.

In a possible implementation method, the first indication information is carried in a broadcast channel.

In a possible implementation method, the first synchronization signal is from a predefined synchronization signal set.

The synchronization signal set herein is a set formed by protocol-predefined synchronization signals, and the synchronization signal set does not include newly added or user-defined synchronization signals. The synchronization signals in the synchronization signal set cannot only be detected and identified by the first terminal in this embodiment of this application, but also can be detected and identified by a terminal that preferentially performs synchronization based on a GNSS or a base station. The first terminal in this embodiment of this application is configured to perform synchronization based on the first synchronization type. Therefore, after detecting the first synchronization information, the first terminal may synchronize with the second terminal based on the first synchronization signal and the first indication information in the first synchronization signal. However, the terminal that preferentially performs synchronization based on a GNSS or a base station is not pre-configured to perform synchronization based on the first synchronization type. Therefore, after detects the first synchronization information, the terminal that preferentially performs synchronization based on a GNSS or a base station may perform synchronization with the second terminal based on the first synchronization signal in the first synchronization information, or may perform synchronization with the GNSS, the base station, or another terminal.

Alternatively, the synchronization signal set herein includes both protocol-predefined synchronization signals and newly added or user-defined synchronization signals. In this method, protocol-predefined synchronization signals in the synchronization signal set can be detected and identified by a terminal that preferentially performs synchronization based on a GNSS or a base station. However, newly added or user-defined synchronization signals cannot be detected and identified by a terminal that preferentially performs synchronization based on a GNSS or a base station. Any synchronization signal in the synchronization signal set may be detected and identified by the first terminal.

Alternatively, the synchronization signal set herein includes only newly added or user-defined synchronization signals. In this method, the synchronization signals in the synchronization signal set cannot be detected and identified by a terminal that preferentially performs synchronization based on a GNSS or a base station. Any synchronization signal in the synchronization signal set may be detected and identified by the first terminal.

In this embodiment of this application, protocol-predefined synchronization signals may also be referred to as first-type synchronization signals. Each first-type synchronization signal is corresponding to one sidelink primary synchronization signal (sidelink primary synchronization signal, SPSS) sequence and one sidelink secondary synchronization signal (sidelink secondary synchronization signal, SSSS) sequence, where a combination of one SPSS sequence and one SSSS sequence corresponding to one synchronization signal may also be referred to as one SL synchronization identity (synchronization identity, SSID). Therefore, it may also be understood that each first-type synchronization signal is corresponding to one SSID. For example, the synchronization signal set includes 672 synchronization signals, each first-type synchronization signal is corresponding to one SSID, and different first-type synchronization signals are corresponding to different SSIDs. Therefore, the synchronization signal set is corresponding to 672 different SSIDs. For example, indexes are successively 0 to 671, or are successively 1 to 672. The "newly added or user-defined synchronization signals" refer to synchronization signals obtained by a person skilled in the art or a user by modifying protocol-predefined synchronization signals, or synchronization signals generated based on a specific algorithm. The SSIDs corresponding to the newly added or user-defined synchronization signals are different from the SSIDs corresponding to the protocol-predefined synchronization signals. The newly added or user-defined synchronization signals may also be referred to as second-type synchronization signals. SSIDs corresponding to the second-type synchronization signals are different from 672 SSIDs corresponding to the first-type synchronization signals. That the SSIDs corresponding to the second-type synchronization signals are different from the SSIDs corresponding to the first-type synchronization signals means that SPSSs in the two SSIDs are completely different or partially different, and/or SSSSs are completely different or partially different.

According to a second aspect, an embodiment of this application provides a synchronization method. The method may be performed by a second terminal or a module used in the second terminal. The method includes: generating first indication information, where the first indication information indicates that the second terminal is a candidate synchronization reference source with a highest synchronization priority; and periodically sending first synchronization information, where the first synchronization information includes a first synchronization signal and the first indication information.

Based on the foregoing solution, the second terminal periodically sends the first synchronization information, so that a terminal that uses the terminal as a candidate synchronization reference source with a highest synchronization priority can be synchronized to the second terminal. Because it is easy to deploy the second terminal as a synchronization source, power consumption of searching for a synchronization source by another terminal can be reduced.

In a possible implementation method, information that indicates to re-search for a synchronization source is sent to a first terminal. Optionally, the information that indicates to re-search for a synchronization source includes a synchronization signal after the second terminal switches a synchronization source and/or a synchronization offset before and after the second terminal switches a synchronization source, the synchronization offset includes a time offset and/or a frequency offset, and the first terminal is a terminal that keeps synchronization with the second terminal.

In a possible implementation method, the first terminal is a terminal based on a first synchronization type, and in the first synchronization type, the terminal is used as a candidate synchronization reference source with a highest synchronization priority.

In a possible implementation method, the first indication information is carried in a broadcast channel.

In a possible implementation method, the first synchronization signal is from a predefined synchronization signal set.

According to a third aspect, an embodiment of this application provides a synchronization method. The method may be performed by a second terminal or a module used in the second terminal. The method includes: selecting a first synchronization signal from a first synchronization signal set, and periodically sending first-type synchronization information, where the first-type synchronization information includes the first synchronization signal; and selecting a second synchronization signal from a second synchronization signal set, and periodically sending second-type synchronization information, where the second-type synchronization information includes the second synchronization signal, where the first synchronization signal set includes one or more newly added or user-defined synchronization signals; and the second synchronization signal set includes one or more protocol-predefined synchronization signals.

For meanings of "newly added or user-defined synchronization signals" and "protocol-predefined synchronization signals", refer to the foregoing description. Details are not described herein again.

A terminal that preferentially performs synchronization based on a GNSS or a base station cannot identify synchronization signals in the first synchronization signal set, but can identify synchronization signals in the second synchronization signal set. A terminal that is preconfigured to perform synchronization based on the first synchronization type may identify both synchronization signals in the first synchronization signal set and synchronization signals in the second synchronization signal set. For a meaning of the terminal that performs synchronization based on the first synchronization type, refer to the description of the first aspect. The terminal that performs synchronization based on the first synchronization type may be, for example, the first terminal described in the first aspect.

Based on this solution, the second terminal may simultaneously or alternately send the user-defined first synchronization signal and the predefined second synchronization signal. Therefore, the terminal that preferentially performs synchronization based on a GNSS or a base station may perform synchronization with the second terminal based on the second synchronization signal, and the terminal that performs synchronization based on the first synchronization type may perform synchronization with the second terminal based on the first synchronization signal, or may perform synchronization with the second terminal based on the second synchronization signal. In this solution, while ensuring that the terminal that performs synchronization based on the first synchronization type can perform synchronization with the second terminal, the terminal that preferentially performs synchronization based on a GNSS or a base station can perform synchronization with the second terminal.

In an implementation method, a length of a sending period of the first-type synchronization information is the same as a length of a sending period of the second-type synchronization information. However, a sending moment of the first-type synchronization information is different from a sending moment of the second-type synchronization information. Based on this solution, the second terminal alternately sends the first-type synchronization information and the second-type synchronization information based on a same length of sending periods.

In another implementation method, a length of a sending period of the first-type synchronization information is different from a length of a sending period of the second-type synchronization information. In addition, a sending moment of the first-type synchronization information is different from a sending moment of the second-type synchronization information. For example, the length of the sending period of the first-type synchronization information is equal to twice the length of the sending period of the second-type synchronization information. In this way, it may be implemented that in a period of time, a quantity of sent second-type synchronization information is twice a quantity of sent first-type synchronization information.

According to a fourth aspect, an embodiment of this application provides a synchronization method. The method may be performed by a first terminal or a module used in the first terminal. The method includes: detecting first-type synchronization information from a second terminal, where the first-type synchronization information includes a first synchronization signal, and the first synchronization signal is from a first synchronization signal set; determining that the first-type synchronization information cannot be identified; detecting second-type synchronization information from the second terminal, where the second-type synchronization information includes a second synchronization signal, and the second synchronization signal is from a second synchronization signal set; and performing synchronization with the second terminal based on the second-type synchronization information, where the first synchronization signal set includes one or more newly added or user-defined synchronization signals; and the second synchronization signal set includes one or more protocol-predefined synchronization signals.

For meanings of "newly added or user-defined synchronization signals" and "protocol-predefined synchronization signals", refer to the foregoing description. Details are not described herein again.

The first terminal is a terminal that preferentially performs synchronization based on a GNSS or a base station.

Based on this solution, if the first terminal cannot identify the first synchronization signal, the first terminal continues to detect another synchronization signal. For example, when detecting a second synchronization signal that can be identified, the first terminal performs synchronization with the second terminal based on the second synchronization signal.

According to a fifth aspect, an embodiment of this application provides a synchronization method. The method may be performed by a terminal or a module used in the terminal. The method includes: searching synchronization information from the terminal; when the synchronization information from the terminal is found, performing synchronization based on the found synchronization information, and stopping searching for the synchronization information from the terminal; or when the synchronization information from the terminal is not found, continuously searching the synchronization information from the terminal.

Based on this solution, the terminal continuously searches for synchronization information from another terminal, until the synchronization information is found and the another terminal performs synchronization with the terminal. In this case, synchronization can be performed by using the terminal as a synchronization source. Compared with a synchronization method in which a base station or a GNSS is preferentially used as a synchronization source, in the method in this embodiment of this application, it is sometimes difficult for the terminal to find a reliable base station signal or a reliable GNSS signal, but it is easy to find a reliable terminal signal. In this way, power consumption caused by the terminal continuously searching for a synchronization source is reduced.

In a possible implementation method, when a plurality of pieces of synchronization information from a plurality of terminals are found, synchronization is performed based on the plurality of pieces of synchronization information.

In a possible implementation method, when a plurality of pieces of synchronization information from a plurality of terminals are found, one piece of synchronization information is selected from the plurality of pieces of synchronization information. Synchronization is performed based on the selected synchronization information.

In a possible implementation method, first synchronization information is selected from the plurality of pieces of synchronization information, and reference signal received power of a terminal corresponding to the first synchronization information is the highest.

In a possible implementation method, after synchronization is performed based on the found synchronization information, the synchronization information is periodically sent.

In a possible implementation method, after searching for the synchronization information from the terminal is stopped, if a trigger condition for re-searching for a synchronization source is met, the synchronization information from the terminal is re-searched.

In a possible implementation method, the trigger condition for re-searching for a synchronization source includes any one or more of the following:
reference signal received power of synchronized terminals is lower than a preset threshold;
indication information is received from synchronized terminals, where the indication information indicates to re-search for a synchronization source; or
it is determined that a previous communication link with another terminal is unsuccessfully established.

According to a sixth aspect, an embodiment of this application provides a communication apparatus, including a processor and an interface circuit, where the interface circuit is configured to receive a signal from another communication apparatus other than the communication apparatus and transmit the signal to the processor, or send a signal from the processor to another communication apparatus other than the communication apparatus, and the processor is configured to implement, through a logic circuit or executing code instructions, any implementation method in the first aspect to the fifth aspect.

According to a seventh aspect, an embodiment of this application provides a communication apparatus, including a processor coupled to a memory. The processor is configured to invoke a program stored in the memory, to perform any implementation method in the first aspect to the fifth aspect. The memory may be located inside or outside the apparatus. In addition, there may be one or more processors.

According to an eighth aspect, an embodiment of this application provides a communication apparatus, including a processor and a memory, where the memory stores computer instructions. When the communication apparatus runs, the processor executes the computer instructions stored in the memory, to enable the communication apparatus to perform any implementation method in the first aspect to the fifth aspect.

According to a ninth aspect, an embodiment of this application provides a communication apparatus. The apparatus may be a terminal or a module used in the terminal. The apparatus has a function of implementing any implementation method in the first aspect to the fifth aspect. This function may be implemented by using hardware, or may be implemented by executing corresponding software by hardware. The hardware or the software includes one or more modules corresponding to the foregoing functions.

According to a tenth aspect, an embodiment of this application provides a communication apparatus, including a module configured to perform any implementation method in the first aspect to the fifth aspect.

According to an eleventh aspect, an embodiment of this application provides a communication apparatus, configured to perform any implementation method in the first aspect to the fifth aspect. The communication apparatus is, for example, a terminal or a chip.

According to a twelfth aspect, an embodiment of this application provides a terminal, configured to perform any implementation method in the first aspect to the fifth aspect.

According to a thirteenth aspect, an embodiment of this application further provides a computer program product. The computer program product includes a computer program. The computer program, when run by a processor, implements any implementation method in the first aspect to the fifth aspect.

According to a fourteenth aspect, an embodiment of this application further provides a computer-readable storage medium, where the storage medium stores computer programs or instructions. The computer programs or instructions, when executed by a processor, implement any implementation method in the first aspect to the fifth aspect.

### BRIEF DESCRIPTION OF DRAWINGS

FIG. 1 is a schematic diagram of an architecture of a communication system to which an embodiment of this application is applied;
FIG. 2(a) is a schematic diagram of a synchronization method according to an embodiment of this application;
FIG. 2(b) is a schematic diagram of a relationship between a sending period of first-type synchronization information and a sending period of second-type synchronization information;
FIG. 2(c) is a schematic diagram of comparison between a sending period of sending two types of synchronization information and a sending period of sending only one type of synchronization information;
FIG. 2(d) is a schematic diagram of comparison between a sending period of sending two types of synchronization information and a sending period of sending only one type of synchronization information;
FIG. 3 is a schematic diagram of a synchronization method according to an embodiment of this application;
FIG. 4 is a schematic diagram of sending synchronization information by a first-type terminal;
FIG. 5(a) is a schematic diagram of a synchronization result of a second-type terminal;
FIG. 5(b) is a schematic diagram of a result of re-searching for a synchronization source;
FIG. 6 is a schematic diagram of a structure of a communication apparatus according to an embodiment of this application; and
FIG. 7 is a schematic diagram of a structure of a communication apparatus according to an embodiment of this application.

### DESCRIPTION OF EMBODIMENTS

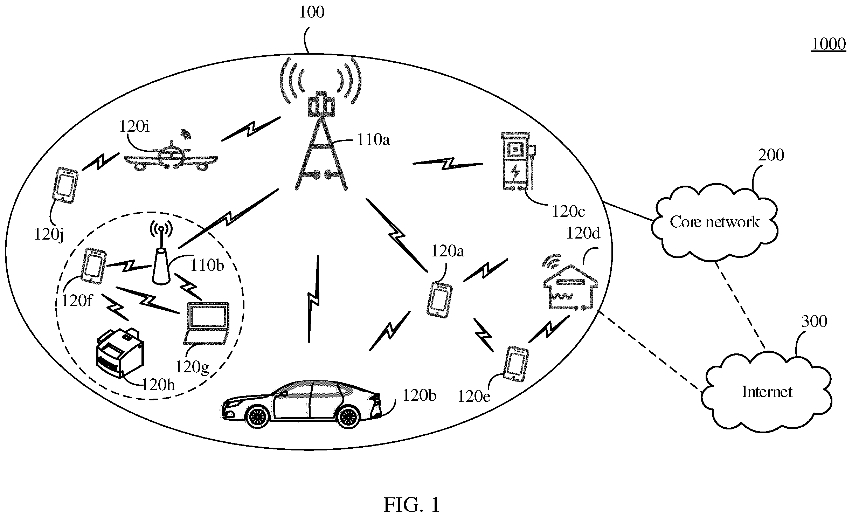

FIG. 1 is a schematic diagram of an architecture of a communication system to which an embodiment of this application is applied. As shown in FIG. 1, the communication system 1000 includes a radio access network 100 and a core network 200. Optionally, the communication system 1000 may further include an Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. FIG. 1 is only a schematic diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a NodeB in a future mobile communication system, or an access node in a wireless fidelity (wireless fidelity, Wi-Fi) system, and the like. Alternatively, the radio access network device may be a module or a unit that implements some functions of the base station, for example, may be a central unit (central unit, CU), or may be a distributed unit (distributed unit, DU). The radio access network device may be a macro base station (for example, 110a in FIG. 1), or may be a micro base station or an indoor station (for example, 110b in FIG. 1), or may be a relay node, a donor node, or the like. A specific technology and a specific device form used by the radio access network device are not limited in this embodiment of this application. In this embodiment of this application, an example in which a base station is used as a radio access network device is used for description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), Internet of Things (Internet of Things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless sending and receiving function, a wearable device, a vehicle, an unmanned aerial vehicle, a helicopter, an airplane, a ship, a robot, a robotic arm, a smart home device, or the like. A specific technology and a specific device form used by the terminal are not limited in this embodiment of this application.

The base station and the terminal may be fixed or movable. The base station and the terminal may alternatively be deployed on land, including indoor or outdoor, handheld or on-vehicle. The base station and the terminal may alternatively be deployed on the water surface, or deployed in an aircraft, a balloon, or a satellite in the air. Application scenarios of the base station and the terminal are not limited in embodiments of this application.

The role of the base station and the terminal may be opposite. For example, the helicopter or an unmanned aerial vehicle 120i in FIG. 1 may be configured as a mobile base station. For those terminals 120j that access to the radio access network 100 through 120i, the terminal 120i is a base station. However, for a base station 110a, 120i is a terminal. To be specific, communication between the 110a and the 120i is performed through a wireless air interface protocol. Certainly, communication between 110a and 120i may also be performed through an interface protocol between base stations. In this case, for 110a, 120i is also a base station. Therefore, both the base station and the terminal may be collectively referred to as a communication apparatus. 110a and 110b in FIG. 1 each may be referred to as a communication apparatus having a base station function, and 120a to 120j in FIG. 1 each may be referred to as a communication apparatus having a terminal function.

Communication between a base station and a terminal, between base stations, or between terminals may be performed through a licensed spectrum, or may be performed through an unlicensed spectrum, or may be performed through both a licensed spectrum and an unlicensed spectrum. Communication may be performed through a spectrum below 6 gigahertz (gigahertz, GHz), or may be performed through a spectrum above 6 GHz, or may be simultaneously performed through a spectrum below 6 GHz and a spectrum above 6 GHz. A spectrum resource used for wireless communication is not limited in this embodiment of this application.

In embodiments of this application, a function of the base station may be performed by a module (such as a chip) in the base station, or may be performed by a control subsystem including a base station function. The control subsystem that includes a base station function may be a control center in the foregoing application scenarios such as a smart grid, industrial control, smart transportation, and smart city. A function of the terminal may alternatively be performed by a module (such as a chip or a modem) in the terminal, or may be performed by an apparatus including a terminal function.

Different from downlink (Downlink, DL) communication and uplink (Uplink, LTL) communication in a cellular network, sidelink (sidelink, SL) communication may support direct communication between terminals. To be specific, user data is directly transmitted between terminals. This avoids transmission of user data in cellular communication through forwarding by a network, thereby reducing a transmission delay and relieving network load. The sidelink may also be referred to as a side link.

Synchronization is the basis for effective communication between terminals or between a terminal and a base station. There are two synchronization types in a sidelink communication: a base station-based synchronization type and a GNSS-based synchronization type. For a terminal in-coverage (In-coverage) of a cellular, the base station-based synchronization type or the GNSS-based synchronization type may be configured. For a terminal out-of-coverage (Out-of-coverage) of a cellular or a terminal that does not have a cellular communication capability, the GNSS-based synchronization type may be configured.

The synchronization process of the terminal includes a process for sending synchronization information and a process for selecting/reselecting a synchronization source.

The synchronization information herein may be a sidelink synchronization signal/physical sidelink broadcast channel block (Sidelink synchronization signal/physical sidelink broadcast channel block, S-SSB). The S-SSB includes an SPSS, an SSSS, and a physical sidelink broadcast channel (physical sidelink broadcast channel, PSBCH). For example, a sending period of the S-SSB is 160 milliseconds (ms), and a plurality of S-SSBs may be repeatedly sent in each period. 2 different SPSS sequences and 336 different SSSS sequences may form 672 different SSIDs. The terminal may identify an SL SSID of another terminal by detecting a SPSS/SSSS sent by the another terminal.

A process in which the terminal sends the synchronization information includes the following.
(1) If a terminal is in-coverage of a base station and performs synchronization by using a GNSS or a base station as a synchronization source, in addition, if the base station instructs the terminal to send synchronization information, or if the base station does not instruct the terminal to send synchronization information but the terminal receives that reference signal received power (Reference signal received power, RSRP) of the base station is lower than a pre-configured threshold, the terminal periodically sends the synchronization information.
(2) If a terminal is out-of-coverage of a base station and performs synchronization by using a GNSS as a synchronization source, the terminal periodically sends synchronization information.
   The terminal periodically sends synchronization information, so that another terminal can synchronize with the terminal.
(3) If a terminal is out-of-coverage of a base station, is not synchronized to the GNSS, and is not synchronized to a synchronization reference terminal, or PSBCH-reference signal received power (PSBCH-reference signal received power, PSBCH-RSRP) of the synchronization reference terminal is lower than the pre-configured threshold, the terminal periodically sends synchronization information.

The terminal is generally a terminal that is far away from the synchronization reference terminal. To enable a more distant terminal to be synchronized, the terminal may periodically send synchronization information, so that the more distant terminal can perform synchronization with the terminal.

A process in which the terminal selects/reselects a synchronization source for synchronization through the GNSS-based synchronization type includes the following.
(1) If a terminal is configured with the GNSS-based synchronization type, the terminal searches for a GNSS signal first. If the GNSS is reliable, the terminal selects a GNSS as a synchronization source. If the GNSS is unreliable, the terminal reselects a synchronization source.
(2) If no reliable GNSS is found as a synchronization source, the terminal performs a full search (full search) to find a synchronization source. To be specific, the terminal searches for all possible SL SSIDs in synchronization information sent by another terminal, and/or searches for synchronization information sent by a base station. When one or more candidate synchronization reference sources are found, one candidate synchronization reference source is selected from the one or more candidate synchronization reference sources as a synchronization source based on a synchronization priority. The candidate synchronization reference source may be a terminal (also referred to as a candidate synchronization reference terminal), or may be a base station.

In a possible implementation, a synchronization priority of a candidate synchronization reference source is as follows.
(a) A candidate synchronization reference source of priority 1 (priority 1, P1): a terminal that is directly synchronized to the GNSS, that is, a terminal that directly uses the GNSS as the synchronization source.

If there is only one terminal of P1, the terminal is selected as the synchronization source. If there are a plurality of terminals of P1, a terminal with the largest PSBCH-RSRP is selected from the plurality of terminals of P1 as the synchronization source.

If there is no terminal of P1, go to (b).
(b) A candidate synchronization reference source of priority 2 (priority 2, P2): a terminal that is indirectly synchronized to the GNSS, that is, a terminal of P2, uses the terminal of P1 as the synchronization source to perform synchronization.

If there is only one terminal of P2, the terminal is selected as the synchronization source. If there are a plurality of terminals of P2, a terminal with the largest PSBCH-RSRP is selected from the plurality of terminals of P2 as the synchronization source.

If there is no terminal of P2, go to (c).
(c) A candidate synchronization reference source of priority 3 (priority 3, P3): base station.

If a synchronization signal of a base station can be detected, the base station is selected as the synchronization source.

If there is no candidate synchronization reference source of P3, go to (d).
(d) A candidate synchronization reference source of priority 4 (priority 4, P4): a terminal that is directly synchronized to the base station, that is, a terminal that directly uses the base station as the synchronization source.

If there is only one terminal of P4, the terminal is selected as the synchronization source. If there are a plurality of terminals of P4, a terminal with the largest PSBCH-RSRP is selected from the plurality of terminals of P4 as the synchronization source.

If there is no terminal of P4, go to (e).
(e) A candidate synchronization reference source of priority 5 (priority 5, P5): a terminal that is indirectly synchronized to the base station, that is, a terminal of P5, uses the terminal of P4 as the synchronization source to perform synchronization.

If there is only one terminal of P5, the terminal is selected as the synchronization source. If there are a plurality of terminals of P5, a terminal with the largest PSBCH-RSRP is selected from the plurality of terminals of P5 as the synchronization source.

If there is no terminal of P5, go to (f).
(f) A candidate synchronization reference source of priority 6 (priority 6, P6): a terminal other than the terminal of P1, the terminal of P2, the terminal of P4, and the terminal of P5 and that can be used as a synchronization source.

If there is only one terminal of P6, the terminal is selected as the synchronization source. If there are a plurality of terminals of P6, a terminal with the largest PSBCH-RSRP is selected from the plurality of terminals of P6 as the synchronization source.

After being synchronized to a synchronization reference source, a full search is continuously performed. If a candidate synchronization reference source with a higher priority or with the same priority but a higher PSBCH-RSRP than the current synchronization reference source is found, a synchronization source is reselected.

In another possible implementation, a synchronization priority of a candidate synchronization reference source is as follows.
(a) A candidate synchronization reference source of priority 1 (priority 1, P1): a terminal that is directly synchronized to the GNSS, that is, a terminal that directly uses the GNSS as the synchronization source.

If there is only one terminal of P1, the terminal is selected as the synchronization source. If there are a plurality of terminals of P1, a terminal with the largest PSBCH-RSRP is selected from the plurality of terminals of P1 as the synchronization source.

If there is no terminal of P1, go to (b).
(b) A candidate synchronization reference source of priority 2 (priority 2, P2): a terminal that is indirectly synchronized to the GNSS, that is, a terminal of P2, uses the terminal of P1 as the synchronization source to perform synchronization.

If there is only one terminal of P2, the terminal is selected as the synchronization source. If there are a plurality of terminals of P2, a terminal with the largest PSBCH-RSRP is selected from the plurality of terminals of P2 as the synchronization source.

If there is no terminal of P2, go to (c).
(c) A candidate synchronization reference source of priority 3 (priority 3, P3): a terminal other than the terminal of P1, the terminal of P2 and that can be used as a synchronization source.

If there is only one terminal of P3, the terminal is selected as the synchronization source. If there are a plurality of terminals of P3, a terminal with the largest PSBCH-RSRP is selected from the plurality of terminals of P3 as the synchronization source.

After being synchronized to a synchronization reference terminal, a full search is continuously performed. If a candidate synchronization reference terminal with a higher priority or with the same priority but a higher PSBCH-RSRP than the current synchronization reference terminal is found, a synchronization source is reselected.

(3) If no reliable GNSS signal is found as a synchronization source and no reliable synchronization reference terminal is found as a synchronization source, the terminal uses itself as a synchronization source and continuously performs a full search to find whether there is another synchronization source. If a candidate synchronization reference terminal is found, a synchronization source is reselected.

A process in which the terminal selects/reselects a synchronization source for synchronization through the base station-based synchronization type includes the following.
(1) If a terminal is configured with the base station-based synchronization type, the terminal searches for a synchronization signal of the base station first. If the synchronization signal of the base station can be found, the terminal selects a base station as a synchronization source. If the synchronization signal of the base station cannot be detected, a synchronization source is reselected.
(2) If no base station is found as a synchronization source, the terminal performs a full search (full search) to find a synchronization source, that is, searches for all possible SL SSIDs in synchronization information sent by another terminal, and/or searches for a GNSS signal. When one or more candidate synchronization reference sources are found, one candidate synchronization reference source is selected from the one or more candidate synchronization reference sources as a synchronization source based on a synchronization priority. The candidate synchronization reference source may be a terminal (also referred to as a candidate synchronization reference terminal), or may be a GNSS.

A synchronization priority of a candidate synchronization reference source is as follows.
(a) A candidate synchronization reference source of priority 1 (priority 1, P1): a terminal that is directly synchronized to the base station, that is, a terminal that directly uses the base station as the synchronization source.

If there is only one terminal of P1, the terminal is selected as the synchronization source. If there are a plurality of terminals of P1, a terminal with the largest PSBCH-RSRP is selected from the plurality of terminals of P1 as the synchronization source.

If there is no terminal of P1, go to (b).
(b) A candidate synchronization reference source of priority 2 (priority 2, P2): a terminal that is indirectly synchronized to the base station, that is, a terminal of P2, uses the terminal of P1 as the synchronization source to perform synchronization.

If there is only one terminal of P2, the terminal is selected as the synchronization source. If there are a plurality of terminals of P2, a terminal with the largest PSBCH-RSRP is selected from the plurality of terminals of P2 as the synchronization source.

If there is no terminal of P2, go to (c).
(c) A candidate synchronization reference source of priority 3 (priority 3, P3): GNSS.

If a reliable GNSS signal can be detected, the GNSS is selected as the synchronization source.

If there is no candidate synchronization reference source of P3, go to (d).
(d) A candidate synchronization reference source of priority 4 (priority 4, P4): a terminal that is directly synchronized to the GNSS, that is, a terminal that directly uses the GNSS as the synchronization source.

If there is only one terminal of P4, the terminal is selected as the synchronization source. If there are a plurality of terminals of P4, a terminal with the largest PSBCH-RSRP is selected from the plurality of terminals of P4 as the synchronization source.

If there is no terminal of P4, go to (e).
(e) A candidate synchronization reference source of priority 5 (priority 5, P5): a terminal that is indirectly synchronized to the GNSS, that is, a terminal of P5, uses the terminal of P4 as the synchronization source to perform synchronization.

If there is only one terminal of P5, the terminal is selected as the synchronization source. If there are a plurality of terminals of P5, a terminal with the largest PSBCH-RSRP is selected from the plurality of terminals of P5 as the synchronization source.

If there is no terminal of P5, go to (f).
(f) A candidate synchronization reference source of priority 6 (priority 6, P6): a terminal other than the terminal of P1, the terminal of P2, the terminal of P4, and the terminal of P5 and that can be used as a synchronization source.

If there is only one terminal of P6, the terminal is selected as the synchronization source. If there are a plurality of terminals of P6, a terminal with the largest PSBCH-RSRP is selected from the plurality of terminals of P6 as the synchronization source.

After being synchronized to a synchronization reference source, a full search is continuously performed. If a candidate synchronization reference source with a higher priority or with the same priority but a higher PSBCH-RSRP than the current synchronization reference source is found, a synchronization source is reselected.

For the GNSS-based synchronization type, it needs to perform a full search to find a synchronization source as long as the terminal is not synchronized to the GNSS. For the base station-based synchronization type, it needs to perform a full search to find a synchronization source as long as the terminal is not synchronized to the base station. For scenarios such as an indoor scenario where a GNSS signal is weak and no cellular network is available (for example, commercial scenarios such as wearables and smart homes), the terminal likely needs to perform a full search, resulting in high power consumption. Especially, for terminals with limited power, such as watches and glasses, power consumption generated in a synchronization process accounts for a large proportion in total power consumption. Therefore, a more effective sidelink synchronization mechanism needs to be designed, to reduce power consumption generated in the synchronization process.

To resolve the foregoing problem, in this embodiment of this application, terminals are classified into a first-type terminal and a second-type terminal. The first-type terminal may also be referred to as a group header (group header, GH) or a head terminal, and the second-type terminal may also be referred to as a group member (group member, GM) or a member terminal. The first-type terminal may be a terminal whose battery capacity is large or whose power is not limited. For example, the first-type terminal may be a terminal with a strong capability (such as a mobile phone) or a terminal powered in a wired manner (such as a large screen). The second-type terminal may be a terminal whose power is limited. For example, the second-type terminal may be a wearable device (such as smart glasses or a smart watch).

The first-type terminal may use the synchronization method described above (i.e., synchronization through the base station-based synchronization type or synchronization through the GNSS-based synchronization type) to be synchronized to the base station, the GNSS, or another terminal. The first-type terminal may be used as a synchronization source, and periodically broadcasts and sends synchronization information, so that the second-type terminal is synchronized to the first-type terminal. In other words, the second-type terminal performs synchronization by using the first-type terminal as a synchronization source. A second terminal and at least one third terminal that are described subsequently in this application are examples of the first-type terminal.

The second-type terminal is pre-configured to perform synchronization based on a first synchronization type, where the terminal is used as a candidate synchronization reference source with a highest synchronization priority in the first synchronization type. In this embodiment of this application, the second-type terminal uses the first-type terminal as a candidate synchronization reference source with a highest synchronization priority. In the synchronization method based on the first synchronization type, if the second-type terminal has been synchronized to a first-type terminal, the second-type terminal does not need to continuously search for a synchronization source. If the second-type terminal has not been synchronized to a first-type terminal, the second-type terminal needs to continuously search for a synchronization source. In the foregoing described GNSS-based or base station-based synchronization method, the GNSS or the base station is preferentially used as a synchronization source. If being synchronized to the GNSS or the base station, it does not need to continuously search for a synchronization source. If not being synchronized to the GNSS or the base station, it needs to continuously search for a synchronization source. Compared with the GNSS-based or base station-based synchronization method, when coverage of the GNSS or the base station is limited, terminal synchronization can be completed more quickly through the synchronization method of the first synchronization type provided in this embodiment of this application. Therefore, power consumption overheads caused by continuously searching for a synchronization source can be reduced. The first terminal described subsequently in this application is an example of the second-type terminal.

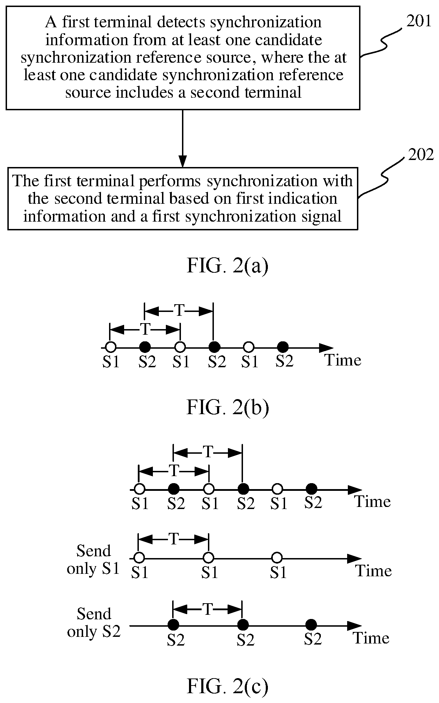

Referring to FIG. 2(a), an embodiment of this application provides a synchronization method. The method includes the following steps.

Step 201: A first terminal detects synchronization information from at least one candidate synchronization reference source.

In this embodiment of this application, detecting may also be understood as searching, they have the same meaning.

The first terminal herein is a second-type terminal. In other words, the first terminal is a terminal based on a first synchronization type.

The candidate synchronization reference source may be a GNSS, a base station, a terminal, or the like. The terminal may be a first-type terminal, a second-type terminal, or a terminal that preferentially performs synchronization based on a GNSS or a base station.

The at least one candidate synchronization reference source includes a second terminal, and the second terminal is the first-type terminal. The synchronization information of the at least one candidate synchronization reference source includes first synchronization information corresponding to the second terminal, and the first synchronization information includes a first synchronization signal and first indication information. The first indication information indicates that the second terminal is a candidate synchronization reference source with a highest synchronization priority, or the first indication information indicates that the second terminal is a first-type terminal, or the first indication information indicates that the second terminal is a head terminal, or the first indication information indicates that the second terminal is a terminal whose power is not limited.

Step 202: The first terminal performs synchronization with the second terminal based on the first indication information and the first synchronization signal.

The first terminal learns that the second terminal is the first-type terminal based on the first indication information. Alternatively, the first terminal determines that the second terminal is a candidate synchronization reference source with a highest synchronization priority based on the second indication information. In addition, because the first terminal is pre-configured to perform synchronization based on the first synchronization type, the first terminal may perform synchronization with the second terminal.

In an implementation method, after obtaining the first synchronization information sent by the second terminal, the first terminal may perform synchronization with the second terminal based on the first synchronization signal carried in the first synchronization information. Optionally, the first indication information is carried in a broadcast channel. When the first synchronization information is an S-SSB, the S-SSB includes an SSSS, a SPSS, and a PSBCH. A combination of the SSSS and the SPSS is the first synchronization signal, the PSBCH carries the first indication information, and PSBCH is an example of the foregoing broadcast channel.

Through the foregoing solution, the first terminal uses another terminal as a candidate synchronization reference source with a highest synchronization priority. Because it is easy to deploy a terminal as a synchronization source, the first terminal can be easily synchronized to a terminal. Therefore, power consumption of searching for a synchronization source by a terminal can be reduced. Compared with a method in which a GNSS is preferentially used as a synchronization source or a base station is preferentially used as a synchronization source, a synchronization method of a first synchronization type provided in embodiments of this application can achieve synchronization more quickly, and power consumption overheads caused by continuous searching for a synchronization source can be reduced.

For example, in an indoor application scenario, the first terminal is a low-power device such as a wearable device, and the second terminal is a mobile phone. Because the mobile phone is likely to be deployed around the wearable device in an indoor environment, the wearable device can easily search for a mobile phone signal, and select a mobile phone signal as the synchronization source for synchronization. However, if synchronization is performed through the GNSS-based or base station-based synchronization type, the wearable device likely finds no reliable GNSS signal or base station signal. As a result, the wearable device needs to continuously search for a GNSS signal or a base station signal, resulting in high power consumption.

The following describes a synchronization process of a first-type terminal by using an example in which the first-type terminal is the second terminal. The synchronization process mainly includes a process for sending synchronization information and a process for selecting/reselecting a synchronization source.

A process in which the second terminal sends the synchronization information includes the following.

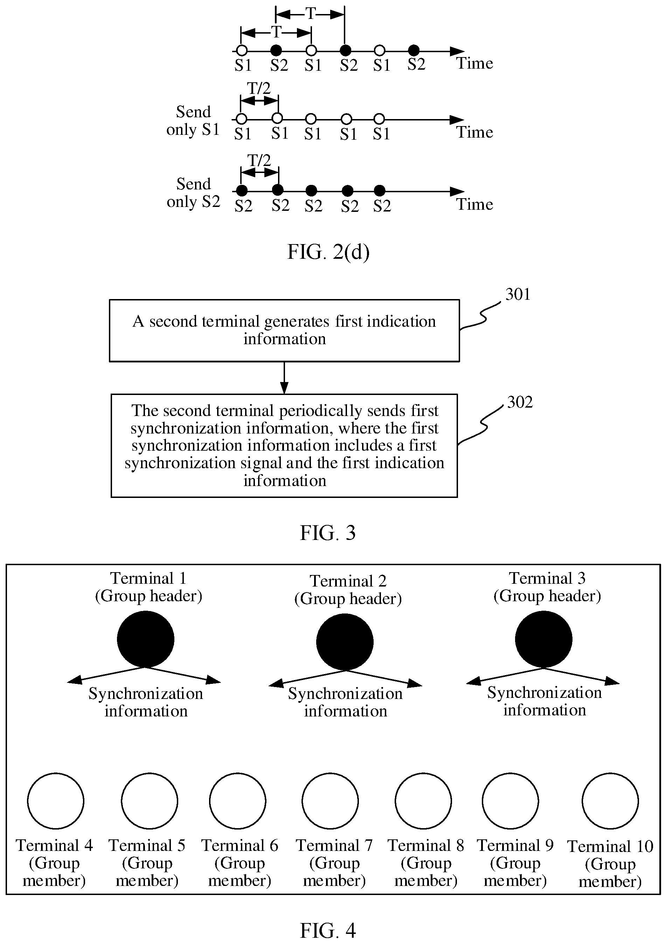

The second terminal periodically sends synchronization information (also referred to as first synchronization information in this embodiment of this application). The synchronization information may be an S-SSB. FIG. 4 is a schematic diagram of sending synchronization information by the first-type terminal. A terminal 1, a terminal 2, and a terminal 3 are all first-type terminals (to be specific, group headers), and the first-type terminals periodically send synchronization information. A first terminal may be the terminal 1, the terminal 2, or the terminal 3 herein. In addition, a terminal 4, a terminal 5, a terminal 6, a terminal 7, a terminal 8, a terminal 9, and a terminal 10 are respectively second-type terminals (to be specific, group members). The second-type terminal is pre-configured to perform synchronization based on the first-type terminal, or perform synchronization based on the first synchronization type.

In an implementation method, to ensure compatibility with a terminal that preferentially performs synchronization based on a GNSS or a base station, the second terminal periodically sends a first-type synchronization information, and periodically sends a second-type synchronization information. Synchronization signals in the first-type synchronization information are from a first synchronization signal set. The first synchronization signal set is a set including newly added or user-defined synchronization signals based on protocol-predefined synchronization signals. The synchronization signals in the first synchronization signal set cannot be identified by a terminal that preferentially performs synchronization based on a GNSS or a base station, but may be identified by the second-type terminal. Synchronization signals in the second-type synchronization information are from a second synchronization signal set. The synchronization signals in the second synchronization signal set are from protocol-predefined synchronization signals. The synchronization signals in the second synchronization signal set may be identified by the terminal that preferentially performs synchronization based on a GNSS or a base station, or may be identified by the second-type terminal. Therefore, the second-type terminal may be synchronized with the first-type terminal based on the first-type synchronization information or the second-type synchronization information. The terminal that preferentially performs synchronization based on a GNSS or a base station may be synchronized with the first-type terminal based on the second-type synchronization information. For meanings of "newly added or user-defined synchronization signals" and "protocol-predefined synchronization signals", refer to the foregoing description. Details are not described herein again.

In an implementation method, a length of a sending period of the first-type synchronization information is the same as a length of a sending period of the second-type synchronization information. However, a sending moment of the first-type synchronization information is different from a sending moment of the second-type synchronization information. Based on this solution, the second terminal alternately sends the first-type synchronization information and the second-type synchronization information based on a same length of sending periods.

In another implementation method, a length of a sending period of the first-type synchronization information is different from a length of a sending period of the second-type synchronization information. In addition, a sending moment of the first-type synchronization information is different from a sending moment of the second-type synchronization information. For example, the length of the sending period of the first-type synchronization information is equal to twice the length of the sending period of the second-type synchronization information. In this way, it may be implemented that in a period of time, a quantity of sent second-type synchronization information is twice a quantity of sent first-type synchronization information.

The following describes the sending period of the first-type synchronization information and the sending period of the second-type synchronization information with reference to an example. FIG. 2(b) is a schematic diagram of a relationship between a sending period of first-type synchronization information and a sending period of second-type synchronization information. In this example, a length of the sending period of the first-type synchronization information (shown by S 1) is equal to a length of the sending period of the second-type synchronization information (shown by S2), and both are T. In addition, the first-type synchronization information and the second-type synchronization information are sent alternately, and a time interval between sending adjacent first-type synchronization information and second-type synchronization information is T/2. Therefore, when the first-type synchronization information and the second-type synchronization information are considered as a whole, the sending period is T/2. To be specific, one piece of the first-type synchronization information or the second-type synchronization information is sent at the time interval of T/2.

In an implementation method, refer to FIG. 2(c). FIG. 2(c) is a schematic diagram of comparison between a sending period of sending two types of synchronization information and a sending period of sending only one type of synchronization information. If the second terminal sends only the first-type synchronization information and does not send the second-type synchronization information, the sending period of the first-type synchronization information may be set to T. Similarly, if the second terminal sends only the second-type synchronization information and does not send the first-type synchronization information, the sending period of the second-type synchronization information may be set to T. According to this solution, regardless of whether the second terminal sends two types of synchronization information or sends only one type of synchronization information, a sending period of the sent synchronization information may remain unchanged, that is, to be T.

In another implementation method, refer to FIG. 2(d). FIG. 2(d) is a schematic diagram of comparison between a sending period of sending two types of synchronization information and a sending period of sending only one type of synchronization information. If the second terminal sends only the first-type synchronization information and does not send the second-type synchronization information, the sending period of the first-type synchronization information may be set to T/2. Similarly, if the second terminal sends only the second-type synchronization information and does not send the first-type synchronization information, the sending period of the second-type synchronization information may be set to T/2. According to this solution, when the two types of synchronization information are sent, if the first-type synchronization information and the second-type synchronization information are considered as a whole, the sending period is T/2. To be specific, one piece of the first-type synchronization information or the second-type synchronization information is sent at the time interval of T/2. This is the same as the sending period in which only the first-type synchronization information is sent or only the second-type synchronization information is sent.

In another implementation method, to ensure compatibility with a terminal that preferentially performs synchronization based on a GNSS or a base station, the synchronization signals (also referred to as first synchronization signals in this embodiment of this application) in the synchronization information (also referred to as first synchronization information in this embodiment of this application) sent by the second terminal is the same as protocol-predefined synchronization signals. Alternatively, the synchronization signals in the synchronization information sent by the second terminal are from a predefined synchronization signal set, and the synchronization signal set includes protocol-predefined synchronization signals. The synchronization signals in the synchronization information sent by the second terminal are the same as the synchronization signals in the synchronization information sent by the terminal that preferentially performs synchronization based on a GNSS or a base station. To enable the second-type terminal to identify whether the received synchronization information is sent by the first-type terminal or sent by the terminal that preferentially performs synchronization based on a GNSS or a base station, the synchronization information sent by the second terminal may carry indication information (also referred to as first indication information in this embodiment of this application). For a function of the first indication information, refer to related descriptions in Step 201.

Refer to FIG. 3. FIG. 3 shows a synchronization method according to an embodiment of this application. The method includes the following steps.

Step 301: A second terminal generates first indication information.

For a function of the first indication information, refer to related descriptions in Step 201.

Step 302: The second terminal periodically sends first synchronization information, where the first synchronization information includes a first synchronization signal and the first indication information.

Through the foregoing solution, the second terminal periodically sends the first synchronization information, so that a terminal that uses the terminal as a candidate synchronization reference source with a highest synchronization priority can be synchronized to the second terminal. Because it is easy to deploy the second terminal as a synchronization source, power consumption of searching for a synchronization source by another terminal can be reduced.

A process in which the second terminal selects/reselects a synchronization source includes the following.

The second terminal may perform synchronization through the GNSS-based synchronization type. In other words, the second terminal preferentially selects a GNSS as a synchronization source. If the second terminal is not synchronized to the GNSS, the second terminal may select a synchronization reference terminal or a base station to perform synchronization. Alternatively, the second terminal may perform synchronization through the base station-based synchronization type. In other words, the second terminal preferentially selects a base station as a synchronization source. If the second terminal is not synchronized to the base station, the second terminal may select a synchronization reference terminal or a GNSS to perform synchronization.

When the second terminal meets a condition for re-selecting a synchronization source, the second terminal performs an operation for re-selecting a synchronization source. In addition, after re-selecting a synchronization source and before switching a synchronization source, the second terminal further sends, to a terminal synchronized to the second terminal, information that indicates to re-search for a synchronization source. Optionally, the information that indicates to re-search for a synchronization source includes a synchronization signal after the second terminal switches a synchronization source and/or a synchronization offset before and after the second terminal switches a synchronization source, and the synchronization offset includes a time offset and/or a frequency offset. The information that indicates to re-search for a synchronization source indicates a terminal synchronized to the second terminal to be re-synchronized.

For example, when the information that indicates to re-search for a synchronization source includes a synchronization signal obtained after the second terminal switches a synchronization source, the terminal synchronized to the second terminal re-searches for synchronization information corresponding to the synchronization signal, to be re-synchronized to the second terminal. For another example, when the information that indicates to re-search for a synchronization source includes the synchronization offset before and after a synchronization source is switched, the terminal synchronized to the second terminal determines new synchronization parameters based on the synchronization parameters of a synchronization source currently maintained to be synchronized and the synchronization offset before and after a synchronization source is switched, and performs synchronization based on the new synchronization parameters.

The following describes a synchronization process of a second-type terminal. The synchronization process mainly includes a process for sending synchronization information and a process for selecting/reselecting a synchronization source.

In this embodiment of this application, the second-type terminal may be classified into a terminal having a first capability specification and a terminal having a second capability specification. The first capability specification is greater than the second capability specification. When a specific condition is met, the terminal having the first capability specification may further serve as a synchronization source to send synchronization information. The terminal having the second capability specification does not serve as a synchronization source to send synchronization information.

The following uses an example in which the second-type terminal is the first terminal for description.

A process in which the first terminal sends the synchronization information includes the following.
(1) If the first terminal is the terminal having the first capability specification, in a case in which the first terminal has been synchronized to a first-type terminal (for example, the second terminal), when there is a communication requirement between the first terminal and another terminal, but the first terminal is not synchronized with the another terminal, thereby a communication link is unsuccessfully established, an upper layer of the first terminal (also referred to as a higher layer, for example, may be an application layer of the first terminal) may trigger resynchronization. For example, the first terminal periodically sends synchronization information based on an upper layer indication (in this embodiment of this application, the synchronization information is also referred to as third synchronization information, and the third synchronization information includes a third synchronization signal), until the communication link is successfully established between the first terminal and the another terminal. For example, when the another terminal successfully receives a communication link establishment request message sent by the first terminal, it indicates that the communication link is successfully established. For another example, when the first terminal successfully receives a communication link establishment request feedback message sent by the another terminal, it indicates that the communication link is successfully established.
   Based on this solution, the terminal having the first capability specification does not periodically send the synchronization information all through, but sends the synchronization information only when a specific condition is met. Therefore, power consumption of the terminal can be reduced.
(2) If the first terminal is the terminal having the second capability specification, the first terminal does not serve as a synchronization source to send synchronization information.

Based on this solution, the terminal having the second capability specification does not need to send the synchronization information, so that power consumption of the terminal can be reduced.

A process in which the first terminal selects/reselects a synchronization source includes the following.

For a process in which the first terminal selects a synchronization source, refer to the Step 201 to Step 202. A more detailed description is given below.

The first terminal is pre-configured to perform synchronization based on the first-type terminal, or pre-configured to perform synchronization based on the first synchronization type. The first terminal searches for synchronization information sent by the first-type terminal. If a plurality of different pieces of synchronization information sent by the first-type terminal is found, the first terminal maintains a plurality of synchronization sources based on the plurality of pieces of synchronization information. Alternatively, the first terminal selects one piece of synchronization information from the plurality of pieces of synchronization information, and performs synchronization based on the synchronization information.

For example, in Step 201, the first terminal detects synchronization information from a plurality of candidate synchronization reference sources, where the plurality of candidate synchronization reference sources include a second terminal and at least one third terminal, and the third terminal is also a first-type terminal. Synchronization information sent by each third terminal includes second synchronization information corresponding to the third terminal, where the second synchronization information includes a second synchronization signal and second indication information. The second indication information indicates that the third terminal is a candidate synchronization reference source with a highest synchronization priority, or the second indication information indicates that the third terminal is a first-type terminal, or the second indication information indicates that the third terminal is a head terminal, or the second indication information indicates that the third terminal is a terminal whose power is not limited.

In an implementation method, the first terminal selects only one first-type terminal as the synchronization source. For example, the first terminal selects, from the second terminal and the at least one third terminal, the second terminal as a synchronization source. The method that the first terminal selects a first-type terminal may be, for example, any one of the following methods.

Method A: The first terminal selects one terminal from a plurality of first-type terminals based on the upper layer indication.

For example, the first terminal selects, based on the upper layer indication and from the second terminal and the at least one third terminal, the second terminal as a synchronization source.

Method B: The first terminal selects one terminal from a plurality of first-type terminals based on the communication requirement (for example, whether a communication link can be successfully established, or communication quality requirement).

For example, if the first terminal determines that a communication link can be successfully established with the second terminal, the first terminal selects, from the second terminal and the at least one third terminal, the second terminal as a synchronization source. For example, after sending a communication link establishment request message to the second terminal, if the first terminal may receive a communication link establishment request feedback message from the second terminal, the first terminal determines that a communication link can be successfully established between the first terminal and the second terminal. For another example, if the first terminal may receive a communication link establishment request message from the second terminal, the first terminal determines that a communication link can be successfully established between the first terminal and the second terminal.

For another example, if the first terminal determines that quality of communication with the second terminal meets the requirement, the first terminal selects, from the second terminal and the at least one third terminal, the second terminal as a synchronization source.

Method C: The first terminal selects one terminal from a plurality of first-type terminals based on reference signal received power (for example, PSBCH-RSRP) between the first terminal and the plurality of first-type terminals.

For example, the first terminal compares the reference signal received power between the first terminal and the plurality of first-type terminals, and selects a first-type terminal with highest reference signal received power. For example, the first terminal selects the second terminal as the synchronization source based on the reference signal received power between the first terminal and the second terminal and the reference signal received power between the first terminal and the at least one third terminal. In particular, if the first terminal determines that the reference signal received power between the first terminal and the second terminal is the largest, the first terminal selects, from the second terminal and the at least one third terminal, the second terminal as a synchronization source.

Optionally, after the first terminal is synchronized with the second terminal, the first terminal stops detecting synchronization information of another candidate synchronization reference source other than the second terminal.

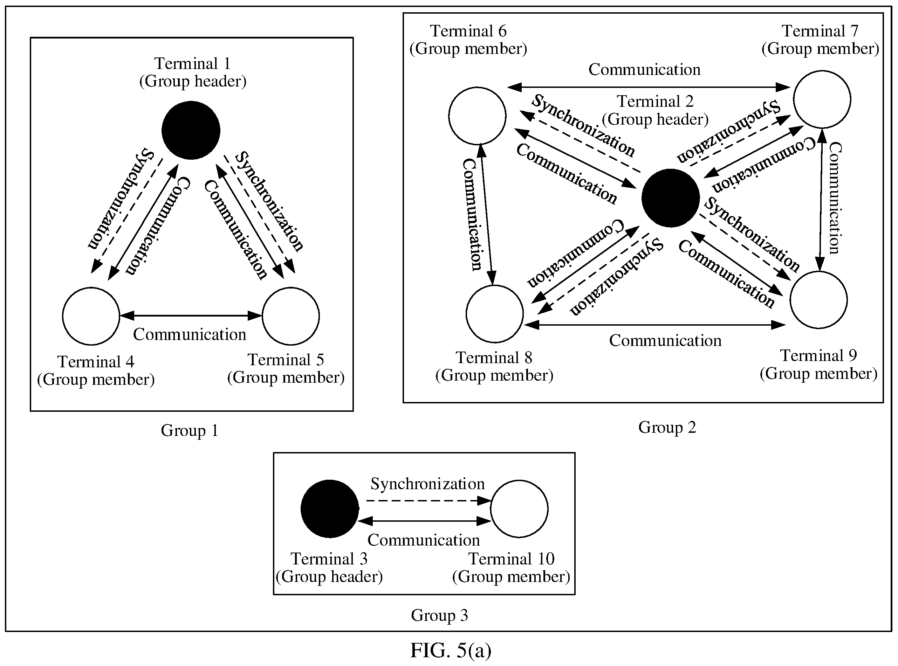

It is assumed that each second-type terminal in FIG. 4 is synchronized to only one first-type terminal. FIG. 5(a) is a schematic diagram of a synchronization result of a second-type terminal. The terminal 4 and the terminal 5 perform synchronization by using the terminal 1 as a synchronization source, the terminal 6, the terminal 7, the terminal 8, and the terminal 9 perform synchronization by using the terminal 2 as a synchronization source, and the terminal 10 performs synchronization by using the terminal 3 as a synchronization source. If a plurality of second-type terminals are synchronized to a same first-type terminal, these second-type terminals may communicate with each other since a same synchronization source is used. In addition, the second-type terminal and the first-type terminal may also communicate with each other. For example, the terminal 4 may communicate with the terminal 5, the terminal 4 may communicate with the terminal 1, and the terminal 5 may communicate with the terminal 1. If a plurality of second-type terminals are synchronized to different first-type terminals, these second-type terminals may or may not be able to communicate with each other. For example, when the terminal 1 and the terminal 2 perform synchronization by using a same synchronization source, the terminal 4 (or the terminal 5) may communicate with any one of the terminal 6 to the terminal 9. For another example, when the terminal 1 and the terminal 2 perform synchronization by using different synchronization sources, the terminal 4 or the terminal 5 cannot communicate with any one of the terminal 6 to the terminal 9.

In another implementation method, the first terminal may alternatively select a plurality of first-type terminals as a synchronization source. For example, on one hand, the first terminal performs synchronization with the second terminal according to Step 202. On the other hand, the first terminal performs synchronization with some or all of the at least one third terminal based on the second indication information and the second synchronization signal in the second synchronization information sent by the at least one third terminal. For example, if the first terminal detects first synchronization information of the second terminal and detects second synchronization information of five third terminals, the first terminal performs synchronization with the second terminal on one hand, and may further perform synchronization with one or more terminals of the five third terminals on the other hand.

Optionally, after the first terminal performs synchronization with the second terminal and some or all of the at least one third terminal, the first terminal stops detecting synchronization information of another candidate synchronization reference source other than the second terminal and some or all of the at least one third terminal.

If the first terminal does not find a reliable first-type terminal as a synchronization source, and when the first terminal is the terminal having the first capability specification, the first terminal continuously searches for synchronization information sent by the first-type terminal, until the synchronization information sent by the first-type terminal is found. Alternatively, the first terminal uses itself as the first-type terminal to select a synchronization source. For a specific implementation method in which the first terminal uses itself as the first-type terminal to select a synchronization source, refer to the foregoing implementation method in which the first-type terminal selects a synchronization source. Details are not described again. If the first terminal does not find a reliable first-type terminal as a synchronization source, and when the first terminal is the terminal having the second capability specification, the first terminal continuously searches for synchronization information sent by the first-type terminal, until the synchronization information sent by the first-type terminal is found.

Based on the foregoing solution, the first terminal uses the first-type terminal as a synchronization source. If being synchronized to a first-type terminal, the first terminal does not need to continuously search for a synchronization source. If not being synchronized to a first-type terminal, the first terminal needs to continuously search for a synchronization source. Because it is easy to deploy the first-type terminal, the first terminal can be easily synchronized to a first-type terminal. Therefore, power consumption of continuously searching for a synchronization source by a terminal can be reduced. Compared with a method in which a GNSS is preferentially used as a synchronization source or a base station is preferentially used as a synchronization source, a synchronization method provided in embodiments of this application can achieve synchronization more quickly, thereby power consumption overheads caused by continuous searching for a synchronization source can be reduced.

It should be noted that, before the first terminal finds synchronization information sent by a first-type terminal, if the first terminal detects a GNSS signal or a synchronization signal of a base station, or synchronization information sent by a terminal that preferentially performs synchronization based on a GNSS or a base station, the first terminal may be first synchronized to the GNSS and the base station, or to the terminal that preferentially performs synchronization based on a GNSS or a base station. Then, the first terminal may subsequently continuously search for a first-type terminal, until the first terminal is re-synchronized to a first-type terminal.

After the first terminal is synchronized to one or more first type terminals, when a trigger condition (referred to as a first condition below) for re-searching for a synchronization source is met, the first terminal re-searches for a synchronization source; otherwise, the first terminal does not need to re-search for a synchronization source. For example, if the first terminal is synchronized to only the second terminal, the first terminal re-detects synchronization information of another candidate synchronization reference source other than the second terminal when the first condition is met. For another example, if the first terminal is synchronized to the second terminal and some or all of the at least one third terminal, the first terminal re-detects synchronization information of another candidate synchronization reference source other than the second terminal and some or all of the at least one third terminal when the first condition is met.

The first condition includes any one or a combination of more of the following:
(a) the upper layer indication of the first terminal re-searches for a synchronization source;
(b) a communication link between the first terminal and a fourth terminal is unsuccessfully established;
(c) the reference signal received power (for example, PSBCH-RSRP) between the first terminal and the second terminal is lower than a first threshold;
(d) the reference signal received power (for example, PSBCH-RSRP) between the first terminal and the third terminal is lower than a first threshold;
(e) the first terminal receives information that is from the second terminal and that indicates to re-search for a synchronization source, optionally, the information that indicates to re-search for a synchronization source includes a synchronization signal after the second terminal switches a synchronization source and/or a synchronization offset before and after the second terminal switches a synchronization source, and the synchronization offset includes a time offset and/or a frequency offset; or
(f) the first terminal receives information that is from the third terminal and that indicates to re-search for a synchronization source, optionally, the information that indicates to re-search for a synchronization source includes a synchronization signal after the third terminal switches a synchronization source and/or a synchronization offset before and after the third terminal switches a synchronization source, and the synchronization offset includes a time offset and/or a frequency offset.

It should be noted that, when the first terminal simultaneously performs synchronization with a plurality of first-type terminals, in a first implementation method, if reference signal received power between a terminal of the plurality of first-type terminals and the first terminal is lower than a first threshold, the first terminal is triggered to re-search for a synchronization source. In a second implementation method, if reference signal received power between a preset quantity of terminals of the plurality of first-type terminals and the first terminal is lower than a first threshold, the first terminal is triggered to re-search for a synchronization source. In a third implementation method, if reference signal received power between each of the plurality of first-type terminals and the first terminal is lower than a first threshold, the first terminal is triggered to re-search for a synchronization source.

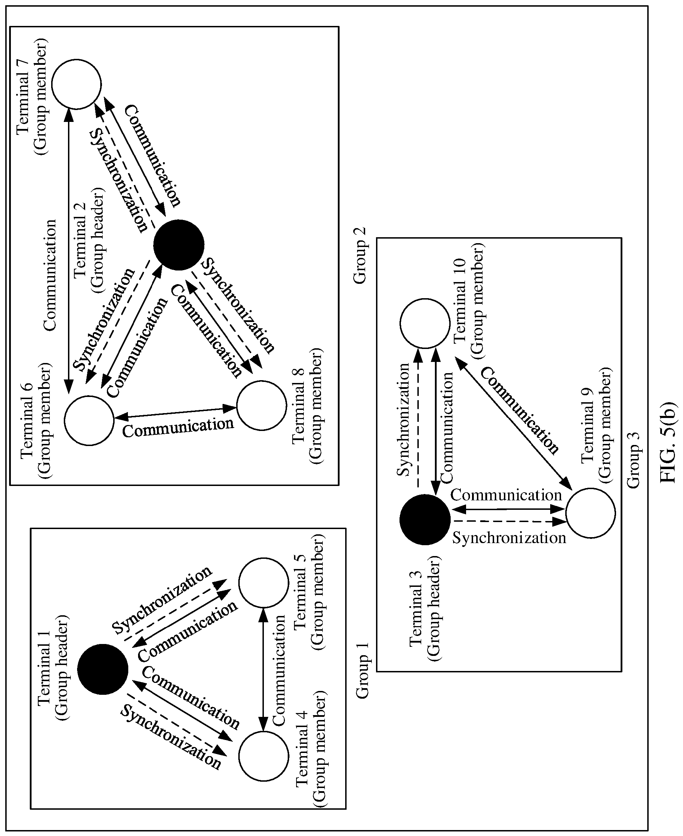

Refer to FIG. 5(b). FIG. 5(b) is a schematic diagram of a result of re-searching for a synchronization source. In FIG. 5(a), the terminal 9 performs synchronization by using the terminal 2 as a synchronization source. After it is determined that a trigger condition for re-searching for a synchronization source is met for the terminal 2, the terminal 9 re-searches for a synchronization source. For example, when it is determined that the terminal 3 is used as a synchronization source, the terminal 9 switches from being synchronized with the terminal 2 to being synchronized with terminal 3.

Based on the foregoing solution, after being synchronized with the first-type terminal, the first terminal does not need to continuously search for a synchronization source, but re-searches for a synchronization source only after a trigger condition for re-searching for a synchronization source is met. Therefore, power consumption of the terminal can be reduced.

In an implementation method, before performing synchronization with the second terminal based on the first indication information and the first synchronization signal, the first terminal further determines that the reference signal received power between the first terminal and the second terminal is greater than a second threshold. Before performing synchronization with the third terminal based on the second indication information and the second synchronization signal, the first terminal further determines that the reference signal received power between the first terminal and the third terminal is greater than a second threshold. In other words, before performing synchronization with a first-type terminal, the first terminal first determines that reference signal received power of the first-type terminal is greater than a second threshold. If reference signal received power of a first-type terminal is less than or equal to a second threshold, the first terminal does not perform synchronization with the first-type terminal.

It may be understood that, to implement functions in the foregoing embodiments, the base station and the terminal include a corresponding hardware structure and/or software module for performing each function. A person skilled in the art should be easily aware that, based on the units and the method steps in the examples described in embodiments disclosed in this application, this application can be implemented through hardware or a combination of hardware and computer software. Whether a function is executed through hardware or hardware driven by computer software depends on particular application scenarios and design constraint conditions of the technical solutions.

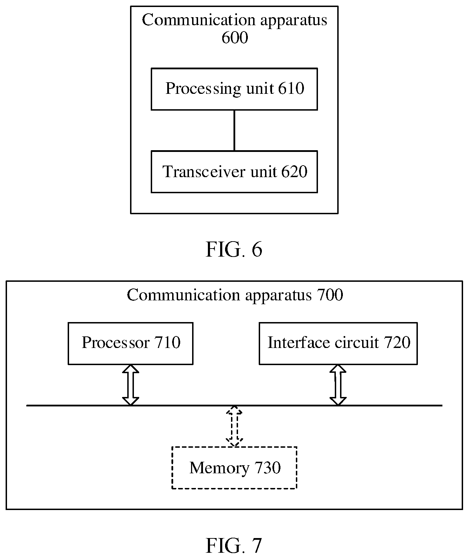

FIG. 6 and FIG. 7 each are a schematic diagram of a structure of a communication apparatus according to an embodiment of this application. These communication apparatuses may be configured to implement functions of the terminal or the base station in the foregoing method embodiments, and therefore can also achieve beneficial effects of the foregoing method embodiments. In this embodiment of this application, the communication apparatus may be one of the terminals 120a to 120j shown in FIG. 1, or may be the base station 110a or 110b shown in FIG. 1, or may be a module (such as a chip) applied to the terminal or the base station.

As shown in FIG. 6, a communication apparatus 600 includes a processing unit 610 and a transceiver unit 620. The communication apparatus 600 is configured to implement a function of the terminal or the base station in the foregoing method embodiment.

When the communication apparatus 600 is configured to implement a function of the first terminal in the foregoing method embodiment, the transceiver unit 620 is configured to receive synchronization information from at least one candidate synchronization reference source, where the first terminal is a terminal that performs synchronization based on a first synchronization type, in the first synchronization type, a terminal is used as a candidate synchronization reference source with a highest synchronization priority, the at least one candidate synchronization reference source includes a second terminal, the synchronization information of the at least one candidate synchronization reference source includes first synchronization information corresponding to the second terminal, the first synchronization information includes a first synchronization signal and first indication information, and the first indication information indicates that the second terminal is the candidate synchronization reference source with the highest synchronization priority. The processing unit 610 is configured to detect the synchronization information from the at least one candidate synchronization reference source, and perform synchronization with the second terminal based on the first indication information and the first synchronization signal.

In a possible implementation method, the at least one candidate synchronization reference source further includes at least one third terminal, the synchronization information of the at least one candidate synchronization reference source includes second synchronization information corresponding to the at least one third terminal, the second synchronization information includes a second synchronization signal and second indication information, and the second indication information indicates that the third terminal is the candidate synchronization reference source with the highest synchronization priority. The processing unit 610 is further configured to select, from the second terminal and the at least one third terminal, the second terminal as a synchronization source.

In a possible implementation method, the processing unit 610 is further configured to select the second terminal as the synchronization source based on the upper layer indication. Alternatively, the processing unit 610 selects the second terminal as the synchronization source based on the reference signal received power between the first terminal and the second terminal and the reference signal received power between the first terminal and the at least one third terminal. Alternatively, the processing unit 610 selects the second terminal as the synchronization source if it is determined that a communication link can be successfully established between the first terminal and the second terminal.

In a possible implementation method, the transceiver unit 620 is further configured to stop detecting synchronization information of another candidate synchronization reference source other than the second terminal.

In a possible implementation method, the transceiver unit 620 is further configured to re-detect synchronization information of another candidate synchronization reference source other than the second terminal when a first condition is met.

In a possible implementation method, the at least one candidate synchronization reference source further includes at least one third terminal, the synchronization information of the at least one candidate synchronization reference source includes second synchronization information corresponding to the at least one third terminal, the second synchronization information includes a second synchronization signal and second indication information, and the second indication information indicates that the third terminal is the candidate synchronization reference source with the highest synchronization priority. The processing unit 610 is further configured to separately perform synchronization with some or all of the at least one third terminal based on the second indication information and the second synchronization signal.

In a possible implementation method, the transceiver unit 620 is further configured to stop detecting synchronization information of another candidate synchronization reference source other than the second terminal and some or all of the at least one third terminal.

In a possible implementation method, the transceiver unit 620 is further configured to re-detect synchronization information of another candidate synchronization reference source other than the second terminal and some or all of the at least one third terminal when a first condition is met.

In a possible implementation method, the first condition includes any one or more of the following: the reference signal received power between the first terminal and the second terminal is lower than a first threshold; the reference signal received power between the first terminal and the third terminal is lower than a first threshold; the upper layer indication of the first terminal re-searches for a synchronization source; a communication link between the first terminal and a fourth terminal is unsuccessfully established; or the first terminal receives information that is from the second terminal or the third terminal and that indicates to re-search for a synchronization source. Optionally, the information that indicates to re-search for a synchronization source includes a synchronization signal after the second terminal switches a synchronization source and/or a synchronization offset before and after the second terminal switches a synchronization source, and the synchronization offset includes a time offset and/or a frequency offset.

In a possible implementation method, the processing unit 610 is further configured to, before performing synchronization with the second terminal based on the first indication information and the first synchronization signal, determine that the reference signal received power between the first terminal and the second terminal is greater than a second threshold.

In a possible implementation method, the transceiver unit 620 is further configured to, after the processing unit 610 performs synchronization with the second terminal based on the first indication information and the first synchronization signal, periodically send third synchronization information, where the third synchronization information includes a third synchronization signal.

In a possible implementation method, the first indication information is carried in a broadcast channel.

In a possible implementation method, the first synchronization signal is from a predefined synchronization signal set.

When the communication apparatus 600 is configured to implement a function of the second terminal in the foregoing method embodiment, the processing unit 610 is configured to generate first indication information, where the first indication information indicates that the second terminal is a candidate synchronization reference source with a highest synchronization priority; and the transceiver unit 620 is configured to periodically send first synchronization information, where the first synchronization information includes a first synchronization signal and the first indication information.

In a possible implementation method, the transceiver unit 620 is further configured to send, to a first terminal, information that indicates to re-search for a synchronization source. Optionally, the information that indicates to re-search for a synchronization source includes a synchronization signal after the second terminal switches a synchronization source and/or a synchronization offset before and after the second terminal switches a synchronization source, the synchronization offset includes a time offset and/or a frequency offset, and the first terminal is a terminal that keeps synchronization with the second terminal.

In a possible implementation method, the first terminal is a terminal based on a first synchronization type, and in the first synchronization type, the terminal is used as a candidate synchronization reference source with a highest synchronization priority.

In a possible implementation method, the first indication information is carried in a broadcast channel.

In a possible implementation method, the first synchronization signal is from a predefined synchronization signal set.

When the communication apparatus 600 is configured to implement a function of the second terminal in the foregoing method embodiment, the processing unit 610 is configured to select a first synchronization signal from a first synchronization signal set, and the transceiver unit 620 is configured to periodically send the first synchronization signal; and the processing unit 610 is further configured to select a second synchronization signal from a second synchronization signal set, and transceiver unit 620 is further configured to periodically send the second synchronization signal, where the first synchronization signal set includes one or more newly added or user-defined synchronization signals; and the second synchronization signal set includes one or more predefined synchronization signals.

More detailed descriptions related to the processing unit 610 and the transceiver unit 620 may be directly obtained from related descriptions in the foregoing method embodiment. Details are not described herein again.

As shown in FIG. 7, the communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, or store input data required by the processor 710 to run the instructions, or store data generated after the processor 710 runs the instructions.

When the communication apparatus 700 is configured to implement the foregoing method embodiment, the processor 710 is configured to implement a function of the processing unit 610, and the interface circuit 720 is configured to implement a function of the transceiver unit 620.

When the communication apparatus is a chip applied to a terminal, the chip of the terminal implements a function of the terminal (that is, the first terminal or the second terminal) in the foregoing method embodiment. The chip of the terminal receives information from another module (for example, a radio frequency module or an antenna) in the terminal, where the information is sent by a base station or the another terminal to the terminal. Alternatively, the chip of the terminal sends information to another module (for example, a radio frequency module or an antenna) in the terminal, where the information is sent by the terminal to a base station or to the another terminal.

It may be understood that, the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner or may be implemented in a manner of executing a software instruction by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a base station or a terminal. Certainly, the processor and the storage medium may be alternatively located in a base station or a terminal as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a special-purpose computer, a computer network, a base station, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state disk. The computer-readable storage medium may be a volatile or non-volatile storage medium, or may include two types of storage medium: a volatile storage medium and a non-volatile storage medium.

In various embodiments of this application, unless otherwise specified or logically conflicted, terms and/or descriptions in different embodiments are consistent and may be referenced by each other. The technical features in different embodiments may be combined to form a new embodiment according to their internal logical relationships.

In this application, at least one means one or more, and a plurality of means two or more. The term "and/or" is an association relationship for describing associated objects and represents that three relationships may exist. For example, A and/or B may represent the following three cases: only A exists, both A and B exist, and only B exists, where A and B may be a singular number or a plural number. In the text description of this application, the character "/" generally indicates an "or" relationship between associated objects. In the formula of this application, the character "/" indicates a "division" relationship between associated objects.

It may be understood that numerical symbols involved in embodiments of this application are differentiated merely for ease of description, but are not used to limit the scope of embodiments of this application. The sequence numbers of the foregoing processes do not mean the execution sequence. The execution sequence of the processes should be determined based on functions and internal logic of the processes.

## Claims

1. A synchronization method, applied to a first terminal, wherein the method comprises:
Detecting synchronization information from at least one candidate synchronization reference source, wherein the first terminal is a terminal that performs synchronization based on a first synchronization type, in the first synchronization type, a terminal is used as a candidate synchronization reference source with a highest synchronization priority, the at least one candidate synchronization reference source comprises a second terminal, the synchronization information of the at least one candidate synchronization reference source comprises first synchronization information corresponding to the second terminal, the first synchronization information comprises a first synchronization signal and first indication information, and the first indication information indicates that the second terminal is the candidate synchronization reference source with the highest synchronization priority; and
Performing synchronization with the second terminal based on the first indication information and the first synchronization signal.

2. The method according to claim 1, wherein the at least one candidate synchronization reference source further comprises at least one third terminal, the synchronization information of the at least one candidate synchronization reference source further comprises second synchronization information corresponding to the at least one third terminal, the second synchronization information comprises a second synchronization signal and second indication information, and the second indication information indicates that the third terminal is the candidate synchronization reference source with the highest synchronization priority; and
the method further comprises:
selecting, from the second terminal and the at least one third terminal, the second terminal as a synchronization source.

3. The method according to claim 2, wherein the selecting, from the second terminal and the at least one third terminal, the second terminal as a synchronization source comprises:
selecting the second terminal as the synchronization source based on an upper layer indication of the first terminal;
selecting the second terminal as the synchronization source based on reference signal received power between the first terminal and the second terminal and reference signal received power between the first terminal and the at least one third terminal; or
selecting the second terminal as the synchronization source if it is determined that a communication link can be successfully established between the first terminal and the second terminal.

4. The method according to any one of claims 1 to 3, further comprising:
stopping detecting synchronization information of another candidate synchronization reference source other than the second terminal.

5. The method according to claim 4, further comprising:
re-detecting the synchronization information of the another candidate synchronization reference source other than the second terminal when a first condition is met.

6. The method according to claim 1, wherein the at least one candidate synchronization reference source further comprises at least one third terminal, the synchronization information of the at least one candidate synchronization reference source further comprises second synchronization information corresponding to the at least one third terminal, the second synchronization information comprises a second synchronization signal and second indication information, and the second indication information indicates that the third terminal is the candidate synchronization reference source with the highest synchronization priority; and
the method further comprises:
separately performing synchronization with some or all of the at least one third terminal based on the second indication information and the second synchronization signal.

7. The method according to claim 6, further comprising:
stopping detecting synchronization information of another candidate synchronization reference source other than the second terminal and some or all of the at least one third terminal.

8. The method according to claim 7, further comprising:
re-detecting the synchronization information of the another candidate synchronization reference source other than the second terminal and some or all of the at least one third terminal when a first condition is met.

9. The method according to claim 5 or 8, wherein the first condition comprises any one or more of the following:
the reference signal received power between the first terminal and the second terminal is lower than a first threshold;
the reference signal received power between the first terminal and the third terminal is lower than a first threshold;
the upper layer indication of the first terminal re-searches for a synchronization source;
a communication link between the first terminal and a fourth terminal is unsuccessfully established; or
the first terminal receives information that is from the second terminal or the third terminal and that indicates to re-search for a synchronization source, wherein the information that indicates to re-search for a synchronization source comprises a synchronization signal after the second terminal switches a synchronization source and/or a synchronization offset before and after the second terminal switches a synchronization source, and the synchronization offset comprises a time offset and/or a frequency offset.

10. The method according to any one of claims 1 to 9, wherein before the performing synchronization with the second terminal based on the first indication information and the first synchronization signal, the method further comprises:
Determining that the reference signal received power between the first terminal and the second terminal is greater than a second threshold.

11. The method according to any one of claims 1 to 10, wherein after the performing synchronization with the second terminal based on the first indication information and the first synchronization signal, the method further comprises:
periodically sending third synchronization information, wherein the third synchronization information comprises a third synchronization signal.

12. The method according to any one of claims 1 to 11, wherein the first indication information is carried in a broadcast channel.

13. The method according to any one of claims 1 to 12, wherein the first synchronization signal is from a predefined synchronization signal set.

14. A synchronization method, applied to a second terminal, comprising:
Generating first indication information, wherein the first indication information indicates that the second terminal is a candidate synchronization reference source with a highest synchronization priority; and
periodically sending first synchronization information, wherein the first synchronization information comprises a first synchronization signal and the first indication information.

15. The method according to claim 14, further comprising:
sending, to a first terminal, information that indicates to re-search for a synchronization source, wherein the information that indicates to re-search for a synchronization source comprises a synchronization signal after the second terminal switches a synchronization source and/or a synchronization offset before and after the second terminal switches a synchronization source, the synchronization offset comprises a time offset and/or a frequency offset, and the first terminal is a terminal that keeps synchronization with the second terminal.

16. The method according to claim 15, wherein the first terminal is a terminal that performs synchronization based on a first synchronization type, and in the first synchronization type, a terminal is used as the candidate synchronization reference source with the highest synchronization priority.

17. The method according to any one of claims 14 to 16, wherein the first indication information is carried in a broadcast channel.

18. The method according to any one of claims 14 to 17, wherein the first synchronization signal is from a predefined synchronization signal set.

19. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement, through a logic circuit or executing code instructions, the method according to any one of claims 1 to 13, or the method according to any one of claims 14 to 18.

20. A computer-readable storage medium, wherein the storage medium stores a computer program or instructions, and when the computer program or instructions are executed by a processor, the method according to any one of claims 1 to 18 is implemented.

21. A computer program product, comprising a computer program, wherein when the computer program is executed by a communication apparatus, the method according to any one of claims 1 to 18 is implemented.
